# EUROPEAN PATENT APPLICATION

(11) **EP 4 835 289 A1**
(43) Date of publication of application: **04.11.2026**
(21) Application number: 21965546.1
(22) Date of filing: 23.11.2021
(51) Int. Cl.: F03D 13/10, F03D 13/20, E04H 12/10, E04H 12/18

(54) **SYSTEM FOR THE AUTOMATED LIFTING OF A HYBRID-TOWER WIND TURBINE AND METHOD FOLLOWED**

(71) Applicant: Nabrawind Technologies, S.L., 31002 Pamplona (ES)
(72) Inventor: SANZ PASCUAL, Eneko, 31002 Pamplona (Navarra) (ES); AROCENA DE LA RUA, Ion, 31001 Pamplona (Navarra) (ES); IRIARTE ELETA, Javier, 31180 Zizur Mayor (Navarra) (ES); MARTÍ GASTALDO, Juan José, 28017 Madrid (ES)
(86) International application number: PCT/IB2021/060866
(87) International publication number: WO 2023/094851

(57) **Abstract**

Disclosed is a system for the automated lifting of a wind turbine mounted on a transition piece (4) with a tubular tower (1), nacelle (2) and corresponding blades (3) thereof. A lifting triangle (12) that passes, through a retractable bolt (14), through the bottom ends of columns (18) of the transition piece (4), the joining thereof being completed with the hydraulic presses (20), ascends and descends in direct contact with the three masts (17). The masts (17) are mounted on bases (7) disposed on the ground and anchored to foundations (6). Cables extend from a winch (25), pass through pulleys (23) at the top of the mast (17) and connect to a fixed pulley block (22) and to a moveable pulley block (16) of the triangle (12).

When everything is connected, the lifting triangle (12) is guided along the masts (17) and, as it ascends, the columns (18) connected to the triangle are made vertical. When the columns (18) are vertical, they are screwed to the transition piece (4) and to the foundations (6) using an adjustable system formed by an interface beam (19), the retractable bolt (14) and the presses (20), and diagonal structures (16) are then assembled, thereby completing the modules. Lastly, the process is repeated, adding as many modules as required to the bottom part.

## Description

### Field of invention

The present invention describes an automated lifting system used with a type of hybrid-tower wind turbines. These wind turbines are assembled starting on a transition piece to which the tubular upper part of the tower is added and then the nacelle and blades. Subsequently, with the automated lifting system arranged around the transition, the assembly is raised and modules are introduced from the bottom. The towers thus constituted are specifically designed for heights greater than 160 m hub height HH.

### Background

The present automated lifting system has already been described in patent EP3130796 of the same applicant. Three lifting systems are protected in that application, each with a lifting platform that is linked to the tower that is automatedly lifted. The base of the three lifting systems is connected with connecting structures forming a triangle. The way it works is, starting with the nacelle, raising sections and introducing modules at the bottom. All the elements are arranged on a support defined as a basic module where the successive modules can be fixed, hoisted and subsequently screwed together. This invention uses auxiliary columns and connecting pieces to proceed with the elevation of the nacelle and the different modules that make up the tower. These last elements are not effective enough and have been improved.

The following patent from the same applicant, EP3467304, introduces important advantages. Its description states that the upper part of the wind turbine is previously assembled before proceeding with the automated lifting to introduce modules through the lower part and complete the assembly. A transition piece is detailed that supports the top of the tower, the nacelle and the blades. This transition is an improvement over the support defined as a basic module in the previous patent. The assembly of the transition piece and the modules to be lifted is carried out on a connection element that protrudes from the foundation itself and the lifting systems are anchored in the foundation itself, avoiding the use of the triangle that connected the base of the three systems in the previous patent. The lifting system cooperates with a joining structure that supports the entire assembly and allows the introduction of modules from the bottom, avoiding the auxiliary columns and connecting pieces of the previous patent. The new automated lifting system, object of the present invention, improves the existing features in the state of the art, improving assembly times and providing more effective lifting solutions.

### Description

An object of the invention is the design of the lifting system formed by three slender masts with their corresponding winches, a pulley system, a lifting triangle between said masts and in contact with them, and the corresponding bases that support all of the above. The simplicity of the structure and the arrangement of the associated systems stands out. The simple assembly and disassembly of the assembly for its subsequent transfer to the next wind turbine. The three masts are braced together from the top in such a way as to stiffen the assembly.

**It** is another object of the invention that the lifting triangle, which rises and falls in contact with the walls of the masts, is formed by different pieces assembled together, which incorporate guiding elements to control their connection with the masts and adjustment elements to facilitate the horizontal movement of the lattice module once it has been assembled and its corresponding subsequent piercing on the foundation.

**It** is another object of the invention that the automated lifting system has new features both to anchor with the columns of the modules, and to lift the columns of the lower module while the upper module is lifted, thus constituting a new method of assembly of the modules of latticework that make up the lower part of the tower.

To achieve the aforementioned objectives, all the parts described must be modular, transportable in conventional vehicles and easily assembled and disassembled.

From what has been described, the following advantages result: The automated system is completely modular, transportable and electric. **It** is designed to operate in strong wind conditions (18 m/s gust and 12 m/s average), which reduces the period of inactivity of the assembly and favours the consequent savings compared to inactivity.

### Brief description of the drawings

A brief description will be given below for a series of drawings useful for better understanding the invention and that expressly relate to an embodiment of said invention that is presented as a non-limiting example thereof.
Figure 1 shows the upper part of the wind turbine and the automated lifting system, assembled and ready to complete the assembly of the lattice part.
Figure 2a shows the arrangement of the support bases with respect to the transition piece and figure 2b shows a detail of said base.
Figure 3a shows the layout of the lifting triangle added to the previous figure and figure 3b a detail of it.
Figure 4a is a detail of the corner of the triangle and figure 4b the same detail with the mast attached.
Figure 5 shows the arrangement of the masts on the bases and the lifting triangle, completing the automated lifting system.
Figure 6 shows the profile of a mast, a perspective detail of the upper part and another of the lower part.
Figures 7a, 7b, 7c and 7d show different moments of the assembly method of the lattice modules at the bottom of the tower.

### Detailed description

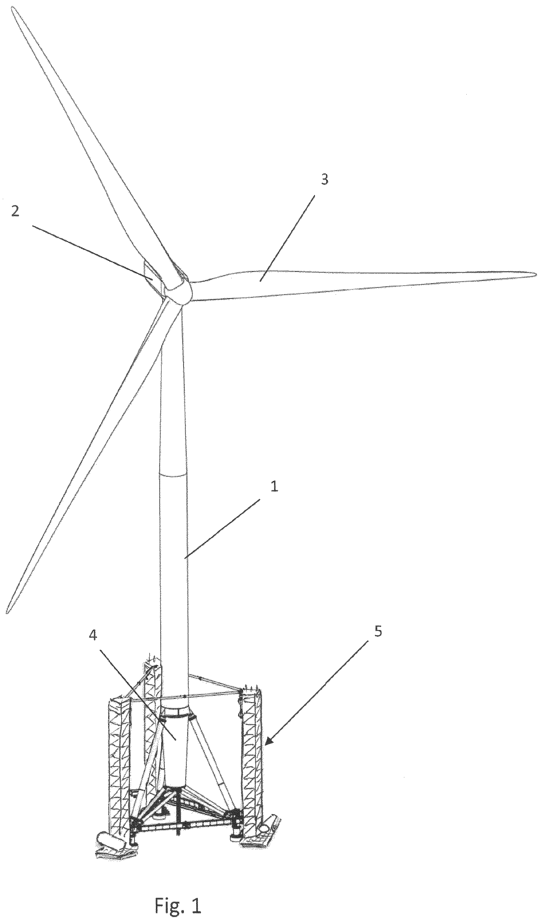

Figure 1 represents the upper part of the wind turbine previously assembled with the tubular tower (1), the nacelle (2), the blades (3) and the transition piece (4) between the tubular tower and the lattice tower that **It** will be mounted at the bottom with the help of the lifting system (5).

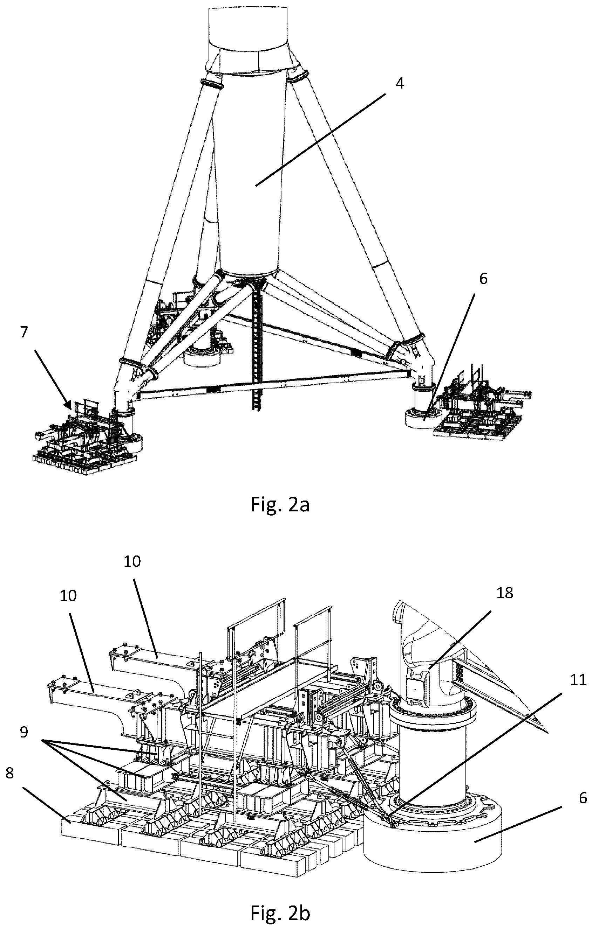

Figure 2a shows how the transition (4) rests and is screwed on the elevated foundations (6), next to which the bases (7) that support the lifting system (5) and which are directly located are arranged on the ground without it having received prior treatment. Figure 2b shows in detail one base (7), of the three used. **It** is supported on wooden blocks (8) and is made up of several superimposed levels of welded and screwed double T beams (9). Two upper beams (10) support and anchor the feet of the masts and the winch (not shown in the figure) and are joined to the foundation (6) by means of multiple tie rods (11).

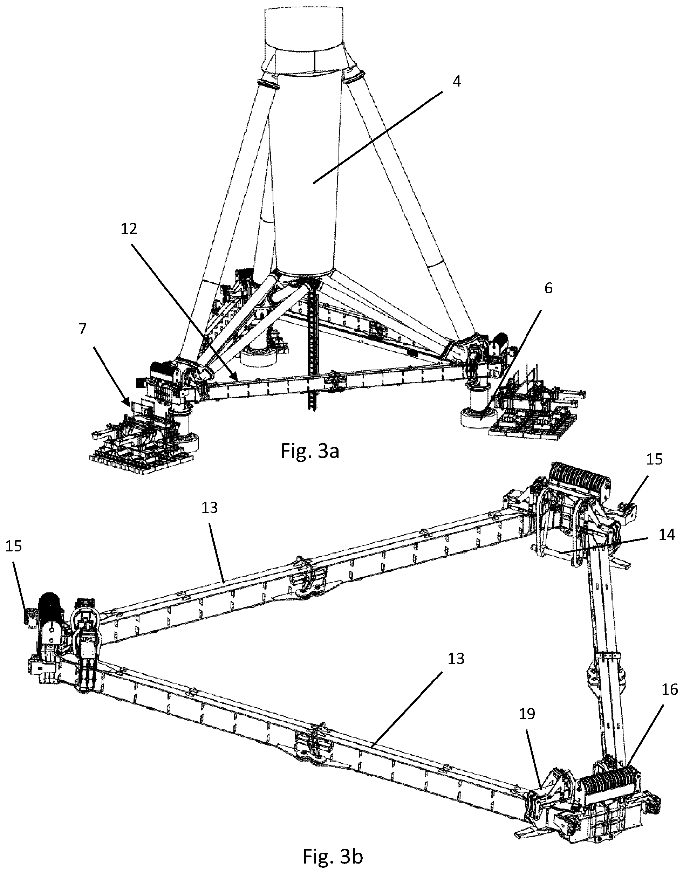

As shown in Figure 3a, the lifting triangle (12) is arranged bordering the transition (4) and its function is to raise the wind turbine by supporting the vertical loads that are generated, these loads reacting through the lifting system (5). Figure 3b details the main elements of the lifting triangle (12): the sides and the vertex. The lateral elements are horizontal pieces (13), with a beam structure, which provide maximum rigidity with minimum weight. The horizontal piece (13) can be a single piece or be constituted by the union of several pieces. The vertex includes a retractable bolt (14) that first passes through the columns of the lower part of the transition (4) and then the columns of the modules to be introduced to complete the tower. The vertex also includes the guiding elements (15) that fix the position of the triangle (12) with respect to the masts (17), in addition to transmitting to said masts (17) the horizontal forces of the wind when it affects the wind turbine. The vertex includes the mobile pulley holder (16) that raises and lowers the triangle (12). And it also includes the interface beam (19) that serves as support for the cables that support the retractable bolt (14), which in this figure passes through the lower ends of the columns of the transition piece (4).

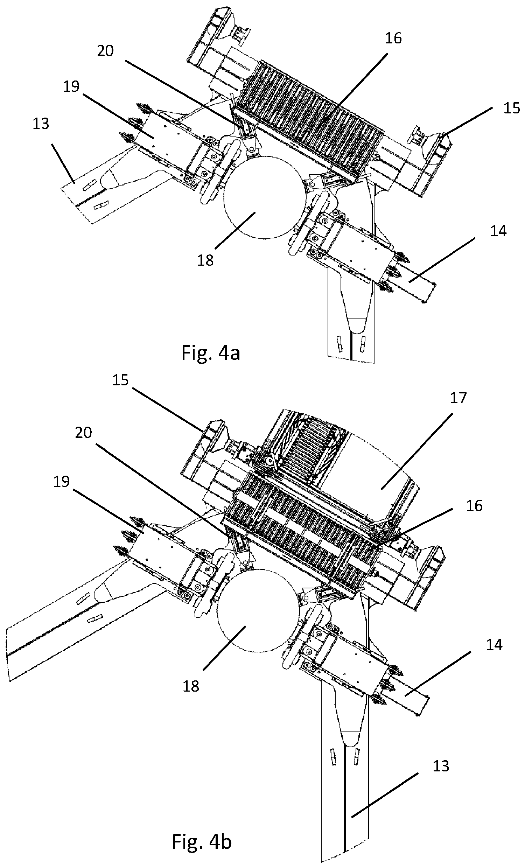

Figure 4a details the vertex of the lifting triangle (12) when the mast is not shown and figure 4b when it is shown attached to the mast (17). The mobile pulley holders (16) are joined by means of their corresponding cables to the pulley holders (22) of the masts (17). The guiding elements (15) are made up of two U-shaped pins with a fixed part, a hydraulic jack and a mobile surface, preferably made of Teflon. The operation of the hydraulic jack guarantees continued contact between triangle (12) and mast (17) through the moving Teflon surfaces. The connection pieces between the lifting triangle (12) and the columns (18) of both the transition and the modules that will be introduced from the bottom, are of two types: an interface beam (19) with its bolt retractable (14) and a hydraulic press (20) that fixes the tower with respect to the triangle horizontally and which have a dual use. These connection pieces (19, 14 and 20) constitute an adjustable system in all directions, avoiding residual stresses and allowing displacement in the plane of the triangle (12) to adjust the columns (18) and be able to move them horizontally at the moment of the puncture with the foundation (6).

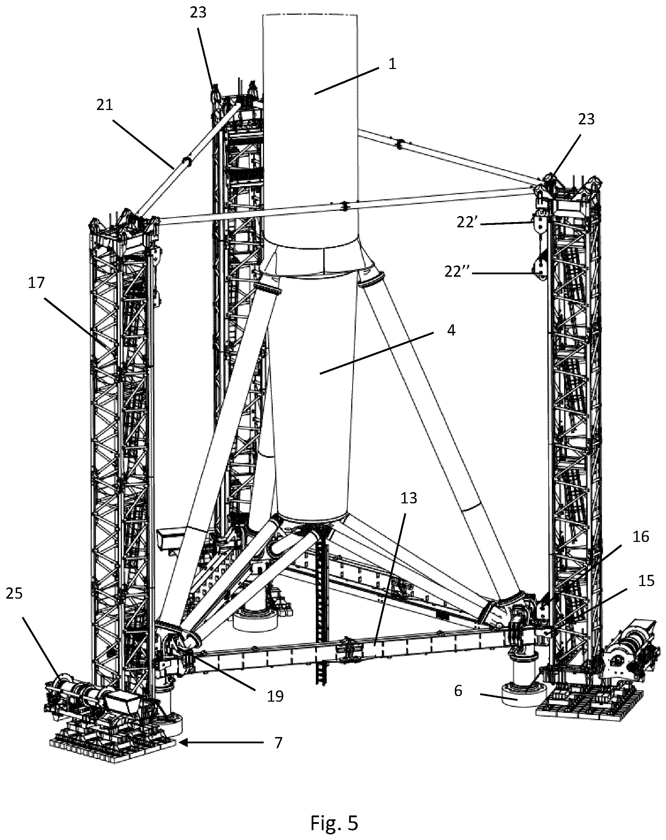

As shown in Figure 5, the three masts (17) are arranged next to the vertices of the lifting triangle (12), a triangle that in turn borders and connects with the transition piece (4). The masts (17) are made of latticework to make them as light as possible, they are made up of several sections that can be assembled so that they can be easily transported disassembled. At the top of the masts (17) there are connecting elements (21) to give rigidity and stability to the assembly. The connecting elements (21) are bolted bracing that is easy to assemble. At the bottom of the mast (17) on the support base (7), the winch (25) is arranged.

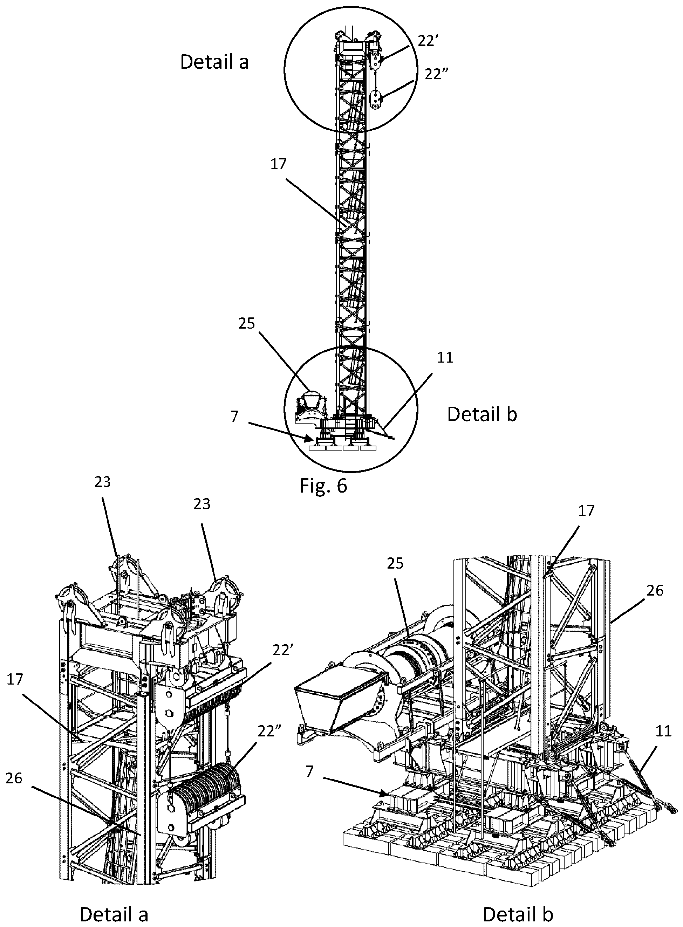

Figure 6 shows the mast (17) that acts as a tower crane, it is supported and anchored on its base (7) which is fixed by tie rods (11) to the foundation (6). **It** has guiding rails (26) along which the guiding element (15) slides and in its upper part a fixed pulley holder (22). Each pulley holder (22) is two facing rollers (22' and 22") that are joined with their corresponding cables to the mobile pulley holder (16) of the triangle (12). The cables reach the upper roller. The cables are routed again and again between the two pulley holder rollers (22' and 22"). These cables, which move the lifting triangle (12), extend from the winch (25), pass over the top of the mast (17) where the pulleys (23) are located and are attached to the pulley holders (22). fixed. The winch (25) is an electrical element that is connected on site to a generating set. **It** has associated elements such as the brake system, the drum, the cables and the hoppers where the cables are stored. As shown in details a and b.

The lifting system (5) is completed with a control system that consists of an electrical cabinet for the electrical supply of the equipment. **It** incorporates all the control systems for connecting sensors: speed control and hydraulic brake control, as well as control of the triangle inclination and control of lifting loads during the maneuver (not shown in the figures).

The assembly method of the lifting system (5) consists of the prior assembly of the transition piece (4) on its corresponding elevated foundations (6). With an auxiliary crane, the sections of the tubular tower (1) and the nacelle (2) are assembled. The blades (3) can be mounted with a crane or with the Bladerunner^{®} system.

The lifting triangle (12), the base (7), the three masts (17), their corresponding winches (25) and the connecting elements (21) that brace the masts are assembled. When the bases (7) are anchored to the foundation (6), the retractable bolts (14) pass through the lower ends of the columns (18) of the transition piece (4), the presses (20) are activated and everything is connected, with the cables and pulleys ready, the authorized one begins.

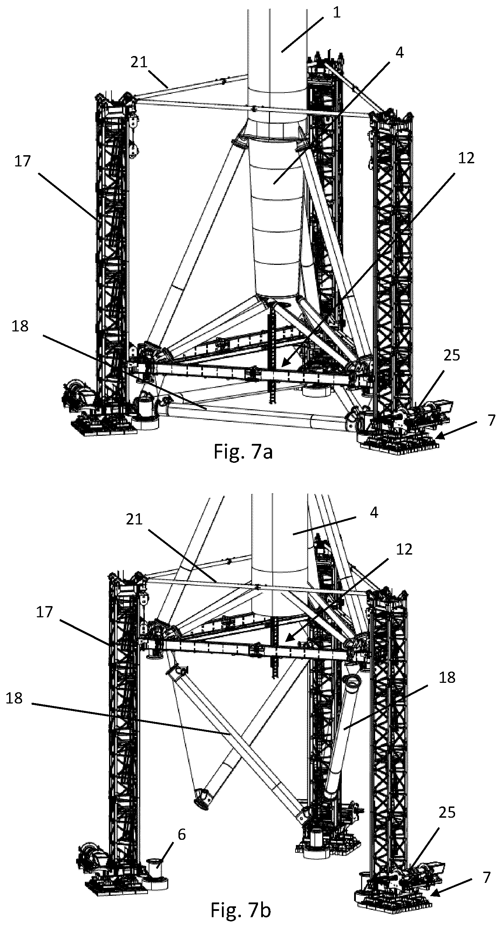

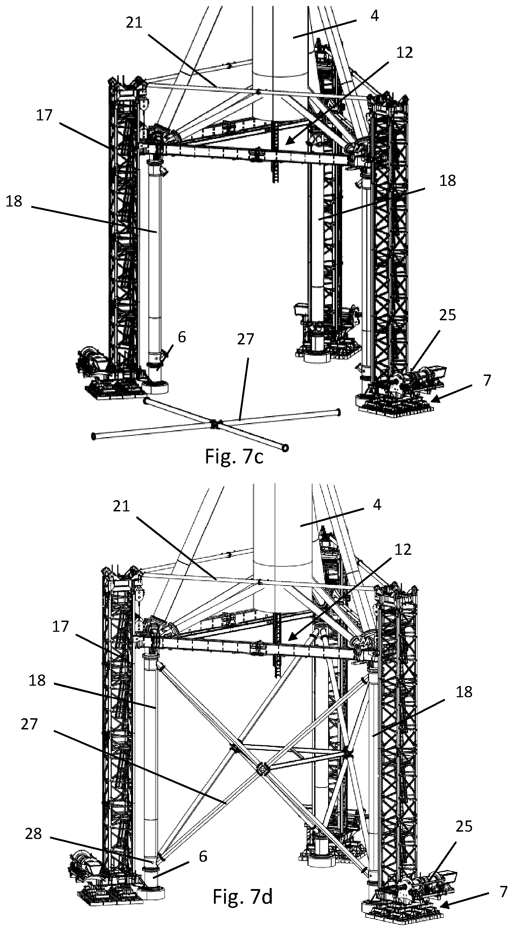

The assembly method of the lower modules of the tower is described in figures 7a, 7b, 7c and 7d. The lifting triangle (12) is guided by the masts (17) and has a regulation plane that adjusts the final height and position of the columns (18) of the lower module. As the triangle (12) rises, the columns (18) joined by one short end become vertical, while the opposite end is longer and causes the column (18) to hang, preventing it from dragging along the ground. When the columns (18) are screwed with the upper piece (in the case of figure 7, the transition piece (4)) and with the raised base (6), we proceed with the assembly of the diagonal structures (27) until completing the module. The process is thus repeated with as many modules as necessary, bolting with the retractable bolt (14) the columns (18) of the new module mounted at the bottom, thanks to the through holes (28) existing at the end of the column. (18).

## Claims

1. System for the automated lifting of a wind turbine where the upper part of the wind turbine is previously assembled before proceeding with the automated lifting to introduce modules through the lower part and complete the assembly, it has a transition piece (4) supported on a foundation (6) that supports the upper part of the tower (1), the nacelle (2) and the blades (3), it has lifting systems (5) peripheral to the transition piece (4) and connection elements that support the part of the mounted wind turbine, and ascend and descend in direct contact with said lifting system (5), **characterized in that** it comprises:
- a base (7) that support the entire assembly and anchored to the foundation (6),
- an assembleable lifting triangle (12) where the lateral elements are horizontal pieces (13) in a beam structure, the vertex includes: an interface beam (19) where the retractable bolt (14) is supported, which initially crosses the lower ends of the transition columns (18) (4) and subsequently pass through the columns (18) of modules to be introduced from the bottom, hydraulic presses (20) that act on the columns (18), the guiding elements ( 15) hydraulics for the connection with the masts (17) and the mobile pulley holders (16) to raise and lower the triangle (12), the interface beam (19) and the presses (20) are adjustable in all directions,
- three vertical masts (17), formed in a lattice and composed of several assembleable sections, with the upper parts braced with connecting elements (21) and with the lower part of the mast (17) fixed on the base (7), base that also support a winch (25),
- some cables, which extend from the winch (25), pass over the top of the mast (17) where some pulleys (23) are located, they are joined to the pulley holder (22), which are two facing rollers (22' and 22"), and joins the mobile pulley holder (16) of the triangle (12), and
- a control system that consists of an electrical cabinet for the electrical connection to power and control the equipment.

2. System for the automated lifting of a wind turbine according to claim 1, wherein the support base (7) sits on the ground without prior treatment, is supported on wooden blocks (8), is formed by several superimposed levels of welded beams and screwed (9), supports and anchors the feet of the masts (17) and the winch (25) by means of two upper beams (10) and are joined to the foundation (6) by means of multiple tie rods (11).

3. System for the automated lifting of a wind turbine according to claim 1, wherein the guiding elements (15) are formed by two U-shaped pins with a fixed part, a hydraulic jack and a mobile surface, preferably made of Teflon, the actuation of the hydraulic jack produces continuous contact between the triangle (12) and the mast (17) through the moving Teflon surfaces and the guiding rails (26).

4. System for the automated lifting of a wind turbine according to claim 1, **characterized in that** the connecting parts: the interface beam (19), the retractable bolt (14) and the presses (20) constitute an adjustable system in all directions, avoiding residual stress allowing displacement in the plane of the triangle (12) to adjust the columns (18) and be able to move them at the time of piercing with the foundation (6).

5. System for the automated lifting of a wind turbine according to claim 1 where the winch (25) is an electrical element that is connected on site to a generating set and has associated elements such as the brake system, the drum, the cables and the hoppers where cables are stored.

6. Method of automatedly lifting a wind turbine equipped with an automated lifting system, mounted together with a transition piece (4) on its corresponding elevated foundations (6), with the tubular tower sections (1), the nacelle (2) and the blades (3) previously assembled, **characterized by**:
- assemble the lifting triangle (12) by crossing the lower ends of the columns (18) of the transition (4) with the retractable bolt (14) and activating the presses (20), assembling the bases (7) that support the system elevation (5) and anchor to the foundation (6), assembling the three masts (17), their corresponding winches (25) and their connecting elements (21), arranging the cables that extend from the winch (25), passing through the pulleys (23) at the top of the mast (17), joining the pulley holder system (22) and the mobile pulley holder (16) of the triangle (12), and when everything is connected, start with the automated lifting,
- guide the lifting triangle (12) along the rails (26) of the masts (17), verticalize the columns (18) as the triangle (12) rises, screw the columns (18) with the transition piece (4 ) and with the foundations (6) with the help of the adjustable system formed by the interface beam (19), the retractable bolt (14) and the presses (20), proceed with the assembly of the diagonal structures (27) thus completing the module, and finally
- repeat the process with the following modules, bolting with the retractable bolt (14) the existing through holes (28) at the end of the columns (18) of the new modules.
